# EUROPÄISCHE PATENTSCHRIFT

(11) **EP 0 368 084 B1**
(45) Veröffentlichungstag und Bekanntmachung des Hinweises auf die Patenterteilung: **28.07.1993**
(21) Anmeldenummer: 89119878.0
(22) Anmeldetag: 26.10.1989
(51) Int. Cl.: B01D 17/12

(54) **Leichtflüssigkeitsabscheider**
Separator for non-miscible liquids
Séparateur de liquides non-miscibles

(30) Priorität: 10.11.1988 DE 3838070
(43) Veröffentlichungstag der Anmeldung: 16.05.1990
(73) Patentinhaber: Hammerschmitt, Nikolaus, D-53879 Euskirchen (DE)
(72) Erfinder: Hammerschmitt, Nikolaus, D-53879 Euskirchen (DE)
(74) Vertreter: Döring, Wolfgang, Dr.-Ing. Patentanwälte Hauck, Graalfs, Wehnert, Döring, Siemons

(56) Entgegenhaltungen:
- EP-A- 0 069 885
- EP-A- 0 276 861
- DE-B- 2 312 571
- DE-C- 1 006 832
- DE-U- 1 931 213
- DE-U- 1 933 635
- DE-U- 8 024 922
- DE-U- 8 406 505
- GB-A- 1 227 427

## Beschreibung

Die vorliegende Erfindung betrifft einen Leichtflüssigkeitsabscheider mit den Merkmalen des Oberbegriffs des Patentanspruchs 1.

Abscheider dieser Art sind bekannt (DE-C-2 951 205). In der Abscheidekammer wird hierbei das zuströmende Leichtflüssigkeits-Schwerflüssigkeits-Gemisch in Leichtflüssigkeit und Schwerflüssigkeit getrennt, wobei die Schwerflüssigkeit über einen Ablauf, beispielsweise in die Kanalisation, abgeführt wird, während die Leichtflüssigkeit über eine Leichtflüssigkeitsabführung aus der Abscheidekammer entfernt wird. Bei dieser Leichtflüssigkeitsabführung kann es sich um einen speziellen Leichtflüssigkeitsablauf handeln, oder die Leichtflüssigkeit kann periodisch vom Spiegel der Schwerflüssigkeit aus der Abscheidekammer entnommen werden, beispielsweise abgesaugt werden.

Derartige Abscheider können Einrichtungen besitzen, die anzeigen, wenn der Leichtflüssigkeitsspiegel in der Abscheidekammer eine bestimmte Höhe erreicht hat, so daß ein Entleerungsvorgang durchgeführt werden muß. Wenn die Leichtflüssigkeit über einen speziellen Leichtflüssigkeitsablauf selbsttätig abgeführt wird, gelangt sie in der Regel in einen Leichtflüssigkeitsspeicher, der ebenfalls mit einer Warnanlage versehen sein kann, um bei einem entsprechenden Flüssigkeitsstand im Speicher eine Entleerung durchzuführen.

Ferner sind Abscheider bekannt, die einen sogenannten selbsttätigen Abschluß aufweisen. Ein solcher selbsttätig wirkender Abschluß besitzt ein Absperrorgan, das dem Ablauf für die Schwerflüssigkeit zugeordnet ist. Dieses Absperrorgan wird über einen auf dem Schwerflüssigkeitsspiegel in der Abscheidekammer befindlichen Schwimmer gesteuert. Erreicht der Schwerflüssigkeitsspiegel in der Abscheidekammer eine maximale Tiefe, verschließt das Absperrorgan den Schwerflüssigkeitsablauf. Auf diese Weise soll verhindert werden, daß Leichtflüssigkeit aus der Abscheidekammer mit über den Schwerflüssigkeitsablauf abgeführt wird und dadurch in die Kanalisation gelangt.

Die vorstehend beschriebenen Arten von Abscheidern haben jedoch den Nachteil, daß bei einem möglichen Ausfall der Warnanlage der Leichtflüssigkeitsspiegel in der Abscheidekammer bzw. im speziellen Leichtflüssigkeitsspeicher zu hoch steigen kann, so daß unter Umständen hierdurch die Leichtflüssigkeit oben aus der Abscheidekammer bzw. dem Leichtflüssigkeitsspeicher durch Öffnungen, Spalte etc. herausgedrückt wird und in das umgebende Erdreich gelangt. Diese Gefahr ist besonders groß, wenn ein selbsttätig wirkender Abschluß vorhanden ist, da hierbei der Schwerflüssigkeitsablauf gesperrt ist und durch weiterzulaufendes Gemisch die in der Abscheidekammer aufschwimmende Leichtflüssigkeit bis über das Zulaufniveau (Erdoberfläche) gedrückt werden kann. Zwar würde sich bei normaler Funktionsweise des selbsttätig wirkenden Abschlusses bei einem derartigen Rückstau in der Abscheidekammer bzw. im Schlammraum das Absperrorgan wieder nach oben bewegen und den Schwerflüssigkeitsablauf freigeben; jedoch ist insbesondere bei geringen Gewichtsdifferenzen zwischen Schwerflüssigkeit und Leichtflüssigkeit die verbleibende Auftriebskraft unzureichend, so daß sich der Schwimmer in diesen Fällen nicht mehr nach oben bewegt und das Absperrorgan weiter den Schwerflüssigkeitsablauf absperrt. Auch kann die Mechanik des Abschlusses aufgrund eines Festsitzens des zugehörigen Gestänges defekt sein, so daß auch hierdurch ein Anheben des Absperrorganes des selbsttätigen Abschlusses verhindert wird.

Wie erwähnt, schwimmt bei derartigen Abscheidern der Schwimmer (Grenzschwimmer) auf dem nach unten verdrängten Schwerflüssigkeitsspiegel. Der Schwimmer muß also schwerer sein als die Leichtflüssigkeit und leichter als die Schwerflüssigkeit. Wenn der Abscheider im Betrieb ist und Gemisch zufließt, sammelt sich die abgeschiedene Leichtflüssigkeit auf dem Schwerflüssigkeitsspiegel in der Abscheidekammer und verdrängt den Schwerflüssigkeitsspiegel nach unten, so daß sich dieser nach und nach dem im unteren Bereich der Abscheidekammer liegenden Schwerflüssigkeitsablauf nähert. Ist die maximale Speichermenge erreicht, dann ist der Schwimmer soweit gesunken, daß der daran hängende Abschluß schließt. Bei weiter zufließendem Gemisch (Schmutz- oder Regenwasser) wird der gesamte Speicherinhalt durch den Anstau und Verlust des Verdrängungseffektes über den Schwerflüssigkeitsspiegel bzw. den Einlauf herausgedrückt, und zwar insbesondere dann, wenn der Einstiegschacht mit dem Abscheider dicht verbunden ist.

Der Erfindung liegt die Aufgabe zugrunde, einen Leichtflüssigkeitsabscheider der angegebenen Art zu schaffen, der in besonders sicherer Weise eine Überfüllung der Abscheidekammer bzw. eines entsprechenden Leichtflüssigkeitsspeichers und damit ein unerwünschtes Austreten der Leichtflüssigkeit aus dem Abscheider bzw. dem Speicher verhindert.

Diese Aufgabe wird erfindungsgemäß bei einem Leichtflüssigkeitabscheider der angegebenen Art durch das kennzeichnende Merkmal des Patentanspruchs 1 gelöst.

Mit der erfindungsgemäßen Maßnahme, die als zusätzliche Sicherheitseinrichtung wirkt, wird erreicht, daß der Leichtflüssigkeitsspiegel, entweder in der Abscheidekammer selbst oder in einem getrennten Leichtflüssigkeitsspeicher, nur eine bestimmte Höhe erreichen kann, wonach der Zulauf für das Leichtflüssigkeits-Schwerflüssigkeits-Gemisch verschlossen wird, so daß kein weiteres Gemisch nachströmen kann. Damit wird verhindert, daß der Leichtflüssigkeitsspiegel durch weiteres zulaufendes Gemisch nach oben gedrückt wird und somit aus dem Abscheider bzw. dem Leichtflüssigkeitsspeicher heraustritt und dadurch die Umgebung des Abscheiders bzw. Speichers verunreinigt.

Wie erwähnt, besteht insbesondere bei der Anordnung eines selbsttätig wirkenden Abschlusses für den Schwerflüssigkeitsablauf die Gefahr, daß durch das weiter zulaufende Gemisch die Leichtflüssigkeit nach oben herausgedrückt wird, wenn die vorstehend erwähnten Gegebenheiten vorhanden sind. Insbesondere hier sichert die erfindungsgemäße Maßnahme ein Absperren des Zulaufes, so daß kein weiteres Gemisch zuströmen kann.

Erfindungsgemäß wird das Absperrorgan im Zulauf für das Leichtflüssigkeits-Schwerflüssigkeits-Gemisch in Abhängigkeit von der Höhe des Leichtflüssigkeitsspiegels gesteuert. Damit werden die mit einer Steuerung in Abhängigkeit von der Grenzlinie zwischen Schwerflüssigkeit und Leichtflüssigkeit (Schwerflüssigkeitsspiegel) verbundenen Nachteile vermieden, wie sie beispielsweise bei den Schwimmersteuerungen der bekannten selbsttätigen Abschlüsse für den Schwerflüssigkeitsablauf insbesondere dann vorhanden sind, wenn der Gewichtsunterschied zwischen Schwerflüssigkeit und Leichtflüssigkeit gering ist. Mit der erfindungsgemäßen Lösung ist somit eine genaue Steuerung des Absperrorgans für den Zulauf möglich.

Die erfindungsgemäß vorgesehene Maßnahme der Möglichkeit einer Absperrung des Zulaufes ist, wie erwähnt, insbesondere auch für Leichtflüssigkeitsabscheider geeignet, die einen Leichtflüssigkeitsspeicher aufweisen, wobei das Absperrorgan den Zulauf bei Erreichen einer bestimmten Höhe des Leichtflüssigkeitsspiegels im Leichtflüssigkeitsspeicher sperrt. Abscheider, die einen solchen Leichtflüssigkeitsspeicher besitzen, sind insbesondere solche, die einen selbsttätig wirkenden Leichtflüssigkeitsablauf aufweisen, wie sie beispielsweise in der eingangs erwähnten DE-C-2 951 205 und den DE-A-33 03 632, 35 16 895 beschrieben sind, wobei insbesondere der in der letztgenannten Veröffentlichung beschriebene doppelt wirkende Leichtflüssigkeitsablauf von Bedeutung ist. Bei diesen selbsttätig wirkenden Leichtflüssigkeitsabläufen ist an sich eine kontinuierliche Abführung der Leichtflüssigkeit aus der Abscheidekammer sichergestellt. Es ist auch möglich, hierbei entsprechende Sicherheitsmaßnahmen zu treffen, um genügend Speicherraum für die abgeführte Leichtflüssigkeit vorzusehen. Die erfindungsgemäß vorgesehene Maßnahme bedeutet jedoch auch für diese Arten von Abscheidern ein zusätzliches Sicherheitsmerkmal, wobei naturgemäß hierbei ein Herausdrücken der Leichtflüssigkeit aus der Abscheidekammer selbst infolge der getrennt davon angeordneten Speicherräume im wesentlichen auszuschließen ist, die erfindungsgemäße Maßnahme jedoch als Sicherheitsmaßnahme für den Speicherraum bzw. als Anzeigeeinrichtung für den Entleeren des Speicherraumes konzipiert werden kann.

Die Steuerung des Absperrorgans erfolgt somit hierbei in Abhängigkeit vom Leichtflüssigkeitsspiegel im Leichtflüssigkeitsspeicher außerhalb der eigentlichen Abscheidekammer von der Schwerflüssigkeit vollkommen getrennt und somit von dieser unabhängig. Dabei läßt sich das gesamte Verdrängungsvolumen eines Schwimmers nutzen, da dieser nicht schwerer sein muß als die Leichtflüssigkeit. Dadurch wird eine zuverlässige Funktionsweise bei allen Dichten sichergestellt.

Erfindungsgemäß wird somit ein selbsttätig wirkender Abschluß am Zulauf geschaffen, der bewirkt, daß weder im Schlammfang noch im Abscheider ein Stau durch zufließende Schwerflüssigkeit hervorgerufen und die aufschwimmende Leichtflüssigkeit aus dem Abscheider gedrückt wird.

Der Leichtflüssigkeitsspeicher bzw. mehrere Leichtflüssigkeitsspeicher können hierbei im Behältnis des Abscheiders selbst oder außerhalb davon angeordnet sein.

Die erfindungsgemäße Maßnahme wird vorzugsweise konstruktiv so verwirklicht, daß der Leichtflüssigkeitsspiegel (in der Abscheidekammer selbst oder im Leichtflüssigkeitsspeicher) mit einem Schwimmer in Kontakt steht, der bei Erreichen einer bestimmten Höhe über einen Verbindungsmechanismus ein Arretierungsorgan für das Absperrorgan löst, so daß dieses in bezug auf den Zulauf aus einer Freigabestellung in eine Absperrstellung gelangt.

Wie bereits erwähnt, läßt sich hierdurch eine genaue Steuerung erreichen, da der Schwimmer auf der Leichtflüssigkeit schwimmt und nicht von der Anordnung auf der Grenzlinie zwischen der Leichtflüssigkeit und der Schwerflüssigkeit abhängig ist. Für die Auftriebskraft des Schwimmers kann somit die gesamte Verdrängung der Leichtflüssigkeit durch den Schwimmer genutzt werden. Für die Funktionsweise der Erfindung spielt es daher keine Rolle, ob die Dichten der Schwerflüssigkeit und Leichtflüssigkeit einen großen Unterschied voneinander aufweisen oder nicht. Der Betätigungsmechanismus zwischen Schwimmer und Absperrorgan ist einfach ausgebildet, so daß hierdurch weitere Gefahrenquellen für Fehlfunktionen ausgeschaltet werden. Das Absperrorgan gelangt vorteilhafterweise durch Schwerkraft aus der Freigabe- in die Absperrstellung, was eine weitere Vereinfachung darstellt.

Bei dem Absperrorgan kann es sich insbesondere um eine Kugel oder eine angelenkte Klappe handeln. Zur Unterbringung des Absperrorganes weist der Abscheider zweckmäßigerweise eine sich nach oben erstreckende Zulauferweiterung auf. Das Absperrorgan ist in dieser Zulauferweiterung untergebracht, wobei es durch das entsprechende Arretierungsorgan gehaltert wird. Wenn das Arretierungsorgan betätigt wird, bewegt sich das Absperrorgan aus der Zulauferweiterung in die Absperrstellung im Zulauf.

Um eine möglichst gute Absperrung des Zulaufes zu erreichen, sieht die Erfindung vor, daß das Absperrorgan in seiner Absperrstellung auf einem Sitz aufliegt, der durch den oberen Rand eines rechtwinklig nach unten abgebogenen Zulaufrohres gebildet wird. Durch diese konstruktive Ausgestaltung wird erreicht, daß eine enge Passung zwischen Sitz und Absperrorgan, insbesondere wenn dieses als Kugel ausgebildet ist, vorhanden ist. Ferner wird hierdurch bewirkt, daß das zuströmende Gemisch das Absperrorgan, das in seiner Absperrstellung am Sitz anliegt, fest gegen den Sitz drückt, d. h. die vom zuströmenden Gemisch ausgeübte Kraft wird als Anpreßkraft nutzbar gemacht.

Eine besonders einfache Ausgestaltung des Verbindungsmechanismus zwischen Schwimmer und Absperrorgan zeichnet sich dadurch aus, daß der Verbindungsmechanismus einen durch den Schwimmer betätigten Hebel und ein stangenbzw. seilförmiges Übertragungsorgan umfaßt, das mit seinem einen Ende am vom Schwimmer entgegengesetzten Ende des Hebels und mit seinem anderen Ende am Arretierungsorgan angeordnet ist. Hat der Leichtflüssigkeitsspiegel in der Abscheidekammer oder im Leichtflüssigkeitsspeicher seine Grenzhöhe erreicht, wird durch den Schwimmer der Hebel betätigt, der dann über das stangen- bzw. seilförmige Übertragungsorgan das Arretierungsorgan für das Absperrorgan so bewegt, daß das Absperrorgan aus seiner Freigabestellung insbesondere durch Schwerkraft in seine Absperrstellung gelangt.

Das Absperrorgan ist vorzugsweise mit einer Warneinrichtung, bei der es sich beispielsweise um eine optische oder akustische Warneinrichtung handeln kann, gekoppelt, so daß der Benutzer des Abscheiders auf ein Entleeren des Speichers oder der Abscheidekammer bzw. mögliche Fehlfunktionen des selbsttätig wirkenden Abschlusses für den Schwerflüssigkeitsablauf aufmerksam gemacht wird.

Um das Absperrorgan nach dem Entleeren der Abscheidekammer bzw. des Speichers bzw. nach dem Beheben des Fehlers wieder in die Freigabestellung zurückzuführen, ist dieses vorzugsweise mit einem vom Abscheider nach außen geführten Handhabungsmechanismus versehen. Hierbei kann es sich beispielsweise um eine Stange oder ein Seil handeln, mit dem das Absperrorgan manuell wieder in die hierfür vorgesehene Zulauferweiterung angehoben werden kann.

Bei einer weiteren Ausführungsform der Erfindung ist das Absperrorgan als Teilkugel, insbesondere Kugelkalotte, ausgebildet. Die Krümmung der Teilkugel weist dabei zweckmäßigerweise in Strömungsrichtung, so daß im geschlossenen Zustand das Absperrorgan durch das in ihm befindliche Zulaufgemisch beschwert wird, wodurch die Abdichtungsverhältnisse verbessert werden und ein Öffnen erschwert wird. Die Teilkugel liegt dabei am Innenrand einer entsprechenden kreisförmigen Öffnung an,und das entsprechende Material hierfür ist vorzugsweise ein Kunststoff mit einer entsprechenden Elastizität, so daß eine enge Anpassung des Absperrorgans an die entsprechende Öffnung erfolgen kann.

Das entsprechende Absperrorgan ist dabei zweckmäßigerweise seitlich vom eigentlichen Zulaufrohr schwenkbar gelagert und verschließt eine kreisförmige Öffnung in einem senkrecht stehenden Abschnitt des Zulaufrohres. Der entsprechende Schwenkmechanismus ist vorzugsweise wie bei den vorstehend beschriebenen Ausführungsformen mit einer entsprechenden Arretierung, die über einen Schwimmer gelöst wird, versehen. Die Rückführung des Absperrorgans in seine geöffnete Stellung kann manuell oder über einen motorischen Antrieb erfolgen.

Die Erfindung wird nachfolgend anhand von Ausführungsbeispielen in Verbindung mit der Zeichnung im einzelnen erläutert. Es zeigen:
- Figur 1: einen Schnitt durch einen Leichtflüssigkeitsabscheider, der mit einer Zulaufsicherung versehen ist;
- Figur 2: eine Draufsicht auf den Abscheider der Figur 1;
- Figur 3: eine weitere Ausführungsform einer Zulaufsicherung im vergrößerten Maßstab;
- Figur 4: einen Schnitt entlang Linie A-A in Figur 5 durch eine weitere Ausführungsform einer Zulaufsicherung;
- Figur 5: einen Längsschnitt durch die Zulaufsicherung der Figur 4;
- Figur 6: einen Längsschnitt durch noch eine weitere Ausführungsform einer Zulaufsicherung;
- Figur 7: eine Draufsicht auf die Zulaufsicherung der Figur 6;
- Figur 8: eine Seitenansicht einer weiteren Ausführungsform einer Zulaufsicherung; und
- Figur 9: eine Draufsicht auf die Zulaufsicherung der Figur 8.

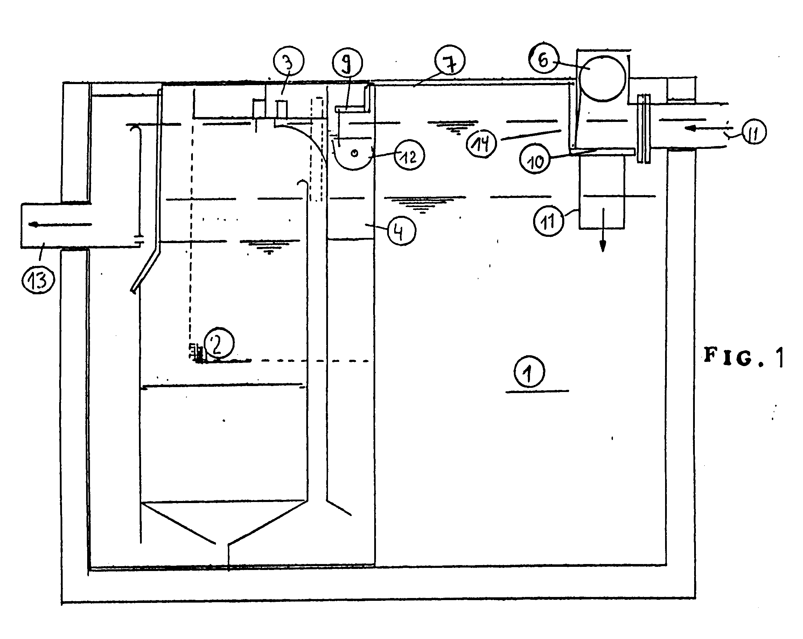

Der in Figur 1 dargestellte Leichtflüssigkeitsabscheider besteht aus einem zylindrischen Behälter, in dem ein Schlammfang 1 und eine Abscheidekammer 2 angeordnet sind. Der Behälter weist ferner einen Zulauf 11 für ein Leichtflüssigkeits-Schwerflüssigkeits-Gemisch, einen Leichtflüssigkeitsablauf 3 und einen Schwerflüssigkeitsablauf 13 auf. Genauere Einzelheiten des Aufbaus des Leichtflüssigkeitsabscheiders sind für die hier beschriebene Erfindung nicht von Bedeutung. Wesentlich ist nur, daß bei diesem Ausführungsbeispiel der Abscheider einen selbsttätig und doppelt wirkenden Leichtflüssigkeitsablauf 3 aufweist, der in der eingangs genannten Veröffentlichung beschrieben ist. Von diesem Leichtflüssigkeitsablauf 3 gelangt die Leichtflüssigkeit in einen Leichtflüssigkeitsspeicher 4 und wird von diesem periodisch entnommen oder abgeführt.

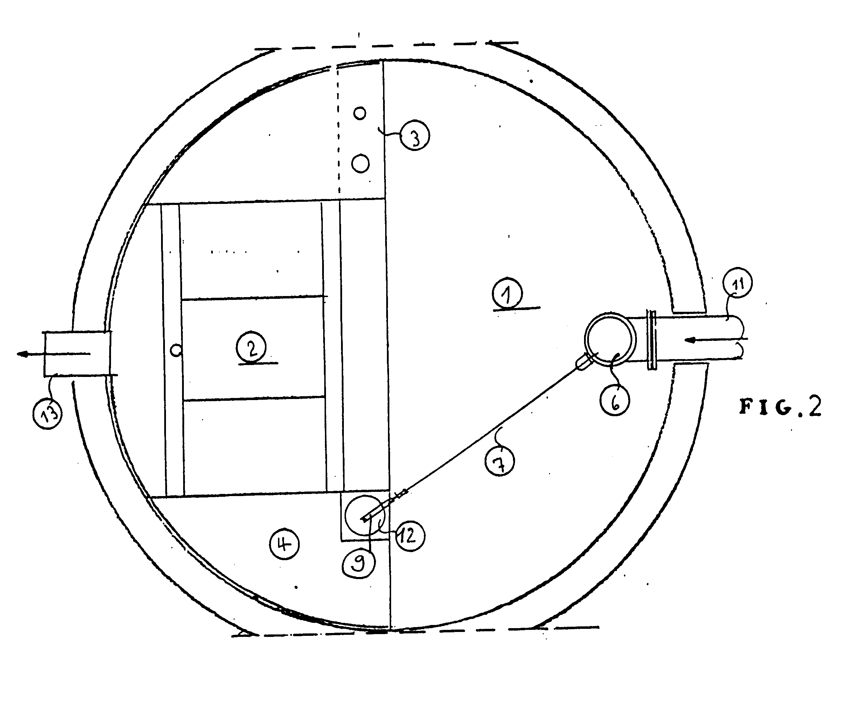

Wie Figur 2 zeigt, bildet der Schlammfang 1 im wesentlichen eine Hälfte des Abscheiders, während die andere Hälfte von der Abscheidekammer 2, vom Leichtflüssigkeitsablauf 3 und vom Leichtflüssigkeitsspeicher 4 besetzt ist. Die Abscheidekammer 2 ist dabei in der Mitte dieser anderen Hälfte angeordnet, während der Leichtflüssigkeitsablauf 3 und der Leichtflüssigkeitsspeicher 4 seitlich von der Abscheidekammer vorgesehen sind.

Der Gemischzulauf 11 ist in den Schlammfang 1 eingeführt und besteht im wesentlichen aus einem nach unten abgewinkelten Rohr, das in den Schlammfang mündet. An der Abwinklungsstelle des Rohres ist eine Abschlußfläche 10 vorgesehen, die einen ringförmigen Sitz für ein in einer nach oben gerichteten Zulauferweiterung untergebrachtes Absperrorgan 6 bildet. Dieses Absperrorgan 6 ist als Kugel ausgebildet und in der Figur 1 in seiner Freigabestellung gezeigt, in der es sich in der Zulauferweiterung befindet. Es wird dort durch ein Arretierungsorgan 14 in der Form einer Stange gehaltert.

Auf dem Leichtflüssigkeitsspiegel im Leichtflüssigkeitsspeicher 4 befindet sich ein Schwimmer 12, der über einen Winkelhebel 9 mit einem Zugseil oder einer Zugstange 7 verbunden ist. Das Zugseil bzw. die Zugstange 7 ist mit dem oberen Ende des Arretierungsorganes 14 verbunden.

Die vorstehend beschriebene Zulaufsicherung funktioniert in der folgenden Weise:
Wenn die über den Leichtflüssigkeitsablauf 3 kontinuierlich abgeführte Leichtflüssigkeit im Speicher 4 eine bestimmte Grenze erreicht, stößt der auf dem Leichtflüssigkeitsspiegel angeordnete Schwimmer 12 an seiner einen Seite gegen einen Anschlag, so daß der Schwimmer bei einem weiteren Steigen des Leichtflüssigkeitsspiegels um seinen Mittelpunkt verschwenkt wird. Durch diese Schwenkbewegung wird der Schenkel des Winkelhebels 9, mit dem der Schwimmer über ein Seil verbunden ist, nach unten verschwenkt, so daß der vertikale Schenkel des Winkelhebels in der Zeichnung nach links verschwenkt wird und damit über das Zugseil bzw. die Zugstange 7 das Arretierungsorgan 14 in der Figur nach links zieht. Hierdurch wird das kugelförmige Absperrorgan 6 freigegeben, so daß dieses durch Schwerkraft auf die mit dem Sitz versehene Abschlußfläche 10 fallen kann und hierdurch den Zulauf 11 absperrt. Das weiterhin zuströmende Gemisch preßt das Absperrorgan 6 hierbei fest gegen den Sitz, so daß ein sicherer Abschluß des Zulaufs erreicht wird.

Auf diese Weise kann der Leichtflüssigkeitsspiegel im Speicher 4 durch weiteres zuströmendes Gemisch nicht mehr ansteigen, so daß die Gefahr eines Austretens am oberen Ende vermieden wird. Wenn die Zulaufsicherung mit einer Warneinrichtung gekoppelt ist, wird der Benutzer des Abscheiders darauf aufmerksam gemacht, daß nunmehr der Speicher zu entleeren ist. Wenn der Speicher entleert wird, kehrt der Schwimmer, der bei dieser Ausführungsform als Kippbecher ausgebildet ist, in seine in der Figur 1 dargestellte Horizontallage zurück, so daß das Arretierungsorgan 14 wieder in seine Ausgangsstellung zurückbewegt wird. Um das Absperrorgan 6 in seine Freigabestellung zurückzubewegen, ist dieses an seinem oberen Ende mit einem Zugseil (nicht gezeigt) versehen, das aus dem Abscheider herausgeführt ist und mit dem der Benutzer das Absperrorgan 6 gegen das federnd gelagerte Arretierungsorgan 14 nach oben bewegen kann. Wenn das Absperrorgan 6 seine Ausgangsstellung erreicht hat, federt das Arretierungsorgan 14 zurück, so daß das Absperrorgan 6 wieder gehaltert wird.

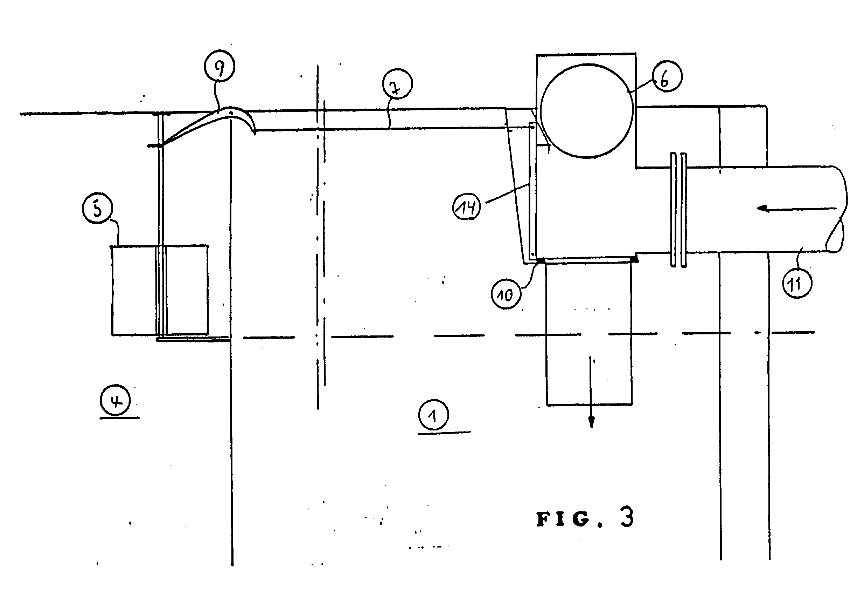

Figur 3 zeigt eine etwas abgeänderte Ausführungsform der Zulaufsicherung, wobei jedoch gleiche oder entsprechende Teile mit gleichen Bezugsziffern versehen sind. Hierbei ist der Schwimmer 5 nicht als Kippbecher ausgebildet, sondern auf einer Führung gelagert. Bei ansteigendem Leichtflüssigkeitsspiegel stößt er unmittelbar gegen das eine Ende des hierbei flügelförmig ausgebildeten Hebels 9, so daß der Hebel um seinen Lagerpunkt verschwenkt wird und wie bei der Ausführungsform der Figuren 1 und 2 das Arretierungsorgan 14 in der Figur nach links zieht, so daß das Absperrorgan 6 auf seinen Sitz fallen kann. Beim Absinken des Schwimmers kehrt der Hebel 9 in seine Ausgangsstellung zurück, so daß das Arretierungsorgan in der Figur wieder nach rechts bewegt wird. Bei dieser Ausführungsform ist das Arretierungsorgan im wesentlichen als Stange ausgebildet, an der ein Ansatz angeordnet ist, der die Halterung für das kugelförmige Absperrorgan 6 bildet.

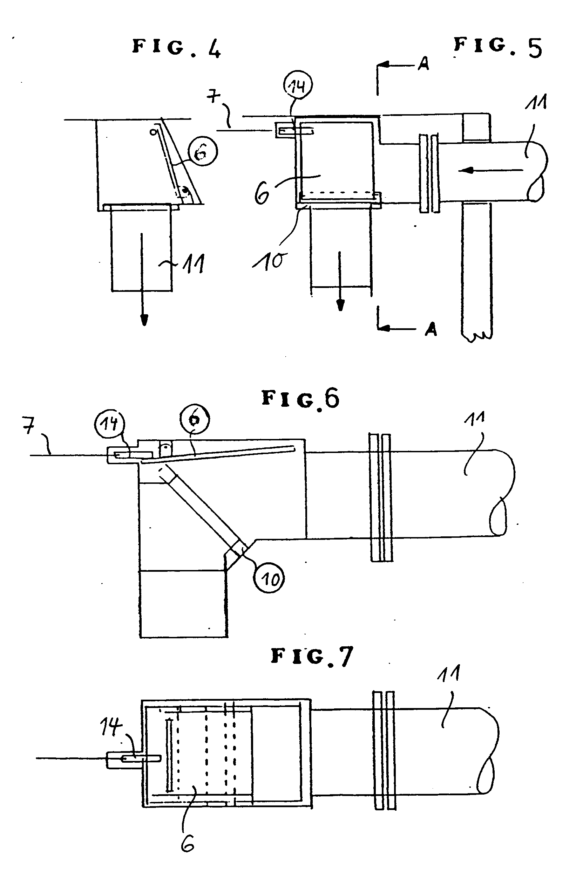

Die Figuren 4 und 5 zeigen eine Ausführungsform einer Zulaufsicherung, bei der das Absperrorgan 6 als Klappe ausgebildet ist. Diese Klappe ist etwa quadratisch ausgebildet und in der Nähe ihres unteren Randes gelenkig geführt. Sie ist parallel zur Strömungsrichtung im Zulauf angeordnet. Als Arretierungsorgan 14 für die Klappe dient hierbei eine Lasche, die mit Hilfe des Zugseils bzw. der Zugstange 7 in Figur 5 nach links bewegt wird, um die Klappe freizugeben, so daß diese durch Schwerkraft in ihre geschlossene Stellung schwenken kann, in der sie auf der Abschlußfläche 10 aufliegt und den vertikal nach unten geführten Teil des Zulaufes sicher verschließt.

Bei der in den Figuren 6 und 7 gezeigten Ausführungsform ist das Absperrorgan 6 ebenfalls als Klappe ausgebildet, jedoch hierbei quer zur Strömungsrichtung im Zulauf angeordnet. Wie man Figur 6 entnehmen kann, ist die Klappe hierbei in der Nähe ihres oberen Randes angelenkt. Als Arretierungsorgan 14 dient wie bei der Ausführungsform der Figuren 4 und 5 eine entsprechende Lasche, die zur Freigabe der Klappe in der Figur nach links bewegt wird. Im geschlossenen Zustand liegt die Klappe hierbei an einer Abschlußfläche bzw. einem Sitz 10 an, der winklig zum horizontalen Abschnitt des Zulaufes angeordnet ist Auch die Klappe ist daher im geschlossenen Zustand zur Strömungsrichtung im Zulauf angewinkelt, so daß bei dieser Ausführungsform die von der Strömung des zulaufenden Gemisches ausgeübte Kraft besonders zum Anpressen der Klappe an ihren Sitz nutzbar gemacht werden kann.

Im übrigen funktionieren die Ausführungsformen der Figuren 3 bis 7 wie die Ausführungsformen der Figuren 1 und 2.

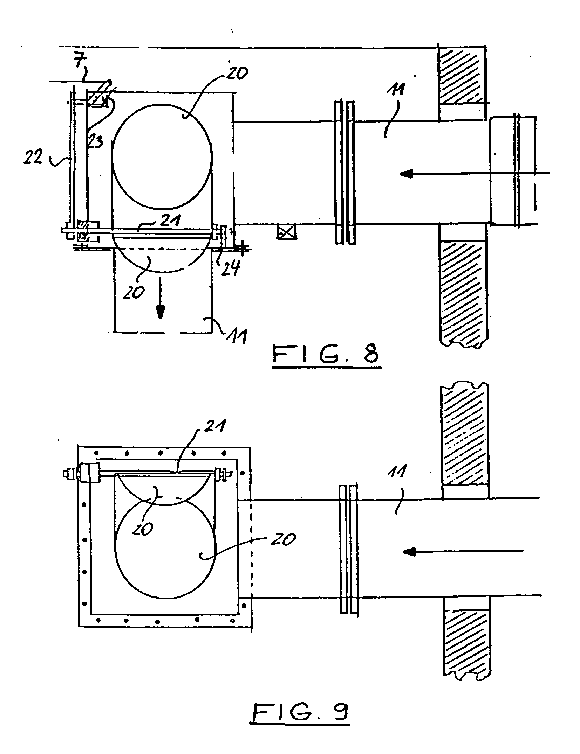

Die Figuren 8 und 9 zeigen ein weiteres Ausführungsbeispiel einer Zulaufsicherung. Die Zulaufsicherung besitzt bei diesem Ausführungsbeispiel ein in Form einer Teilkugel (Kugelkalotte) ausgebildetes Absperrorgan 20, das in den Figuren jeweils in seiner geschlossenen und seiner offenen Stellung dargestellt ist. Das Absperrorgan 20 ist seitlich von dem horizontal angeordneten Zulaufrohr 11 angeordnet und wird über eine Schwenkwelle 21 aus seinem geöffneten in seinen geschlossenen Zustand verschwenkt. Die Schwenkwelle 21 ist über ein Gestänge 22 mit einer Arretierung 23 verbunden. Die Arretierung wird über ein Gestänge 7 oder Seil eines Schwimmers zum Schließen des Absperrorganes freigegeben.

Das teilkugel förmige Absperrorgan 20 ist über geeignete Befestigungselemente an der Schwenkwelle 21 fest angeordnet. Wenn der Schwimmer einen bestimmten Stand erreicht hat, löst er die Arretierung 23, so daß durch Schwerkraftwirkung das Absperrorgan 20 aus seiner geöffneten in seine geschlossene Stellung gelangt. Es liegt dann am Innenrand einer kreisförmigen Öffnung an, die von einem entsprechenden Sitz 24 aus Kunststoff gebildet wird, der den oberen Abschluß eines vertikal angeordneten Abschnitts des Zulaufrohres 11 bildet. Aufgrund der Tatsache, daß die Teilkugel in Strömungsrichtung gekrümmt ist, wird eine gute Abdichtung erzielt, denn das zulaufende Gemisch füllt die Teilkugel aus und erhöht auf diese Weise das auf dem entsprechenden Sitz lastende Gewicht.

## Patentansprüche

1. Leichtflüssigkeitsabscheider mit einem Zulauf (11) für ein Leichtflüssigkeits-Schwerflüssigkeits-Gemisch, mindestens einer Abscheidekammer (2), einem Schwerflüssigkeitsablauf (13) und einer Leichtflüssigkeitsabführung (3), wobei dem Zulauf (11) für das Leichtflüssigkeits-Schwerflüssigkeits-Gemisch ein Absperrorgan (6) zugeordnet ist, dadurch gekennzeichnet, daß das Absperrorgan (6) bei Erreichen einer bestimmten Höhe des Leichtflüssigkeitsspiegels selbsttätig den Zulauf (11) sperrt.

2. Leichtflüssigkeitsabscheider nach Anspruch 1, dadurch gekennzeichnet, daß er einen selbsttätigen Abschluß für den Schwerflüssigkeitsablauf (13) aufweist, dessen Betätigung und Absperrung des Schwerflüssigkeitsablaufes (13) einen Anstieg des Leichtflüssigkeitsspiegels und somit eine Betätigung des Absperrorgans (6) bewirkt.

3. Leichtflüssigkeitsabscheider nach Anspruch 1 oder 2, dadurch gekennzeichnet, daß er einen von der Abscheidekammer getrennten Leichtflüssigkeitsspeicher (4) aufweist und daß das Absperrorgan (6) den Zulauf (11) bei Erreichen einer bestimmten Höhe des Leichtflüssigkeitsspiegels im Leichtflüssigkeitsspeicher sperrt.

4. Leichtflüssigkeitsabscheider nach einem der vorangehenden Ansprüche, dadurch gekennzeichnet, daß der Leichtflüssigkeitsspiegel mit einem Schwimmer (12) in Kontakt steht, der bei Erreichen einer bestimmten Höhe bzw. Winkelstellung über einen Verbindungsmechanismus ein Arretierungsorgan (14) für das Absperrorgan (6) löst, so daß dieses in bezug auf den Zulauf (11) aus einer Freigabestellung in eine Absperrstellung gelangt.

5. Leichtflüssigkeitsabscheider nach Anspruch 4, dadurch gekennzeichnet, daß das Absperrorgan (6) durch Schwerkraft aus der Freigabe- in die Absperrstellung gelangt.

6. Leichtflüssigkeitsabscheider nach einem der vorangehenden Ansprüche, dadurch gekennzeichent, daß das Absperrorgan (6) als Kugel oder als angelenkte Klappe ausgebildet ist.

7. Leichtflüssigkeitsabscheider nach einem der vorangehenden Ansprüche, dadurch gekennzeichnet, daß das Absperrorgan (6) in seiner Freigabestellung in einer sich nach oben erstreckenden Zulauferweiterung angeordnet ist.

8. Leichtflüssigkeitsabscheider nach einem der vorangehenden Ansprüche, dadurch gekennzeichnet, daß das Absperrorgan (6) in seiner Absperrstellung auf einem Sitz (10) aufliegt, der durch den oberen Rand eines rechtwinklig nach unten abgebogenen Zulaufrohres gebildet wird.

9. Leichtflüssigkeitsabscheider nach einem der Ansprüche 4 bis 8, dadurch gekennzeichnet, daß der Verbindungsmechanismus einen durch den Schwimmer (5) betätigten Hebel (9) und ein stangen- bzw. seilförmiges Übertragungsorgan (7) umfaßt, das mit seinem einen Ende am vom Schwimmer (12) entgegengesetzten Ende des Hebels (9) und mit seinem anderen Ende am Arretierungsorgan (14) angeordnet ist.

10. Leichtflüssigkeitsabscheider nach einem der vorangehenden Ansprüche, dadurch gekennzeichnet, daß das Absperrorgan (6) mit einer Warneinrichtung gekoppelt ist.

11. Leichtflüssigkeitsabscheider nach einem der vorangehenden Ansprüche, dadurch gekennzeichnet, daß das Absperrorgan (6) einen vom Abscheider nach außen geführten Handhabungsmechanismus zum Zurückführen des Absperrorgans (6) in die Freigabestellung aufweist.

12. Leichtflüssigkeitsabscheider nach einem der Ansprüche 1 bis 5 oder 7 bis 11, dadurch gekennzeichnet, daß das Absperrorgan als Teilkugel (20) ausgebildet ist.

13. Leichtflüssigkeitsabscheider nach Anspruch 12, dadurch gekennzeichnet, daß die Teilkugel (20) eine in Strömungsrichtung weisende Krümmung besitzt.

14. Leichtflüssigkeitsabscheider nach Anspruch 12 oder 13, dadurch gekennzeichnet, daß die Teilkugel (20) seitlich vom Zulaufrohr (11) schwenkbar gelagert ist und in ihrer geschlossenen Stellung einen abwärts führenden Zulaufrohrabschnitt verschließt.

## Claims

1. A light liquid separator comprising an inlet (11) for a light liquid/heavy liquid mixture, at least one separation chamber (2), a heavy liquid outlet (13) and a light liquid discharge means (3), wherein the inlet (11) for the light liquid/heavy liquid mixture is associated with a shut-off member (6), characterized in that the shut-off member (6) automaticly blocks the inlet (11) if a definite height of the light liquid level is reached.

2. The light liquid separator according to claim 1, characterized in that it includes an automatic closure for the heavy liquid outlet (13), the actuation thereof and blocking of the heavy liquid outlet (13) causing a rise of the light liquid level and thus an actuation of the shut-off member (6).

3. The light liquid separator according to claim 1 or 2, characterized in that it includes a light liquid reservoir (4) separate from the separation chamber and that the shut-off member (6) blocks the inlet (11) if a definite height of the light liquid level in the light liquid reservoir is reached.

4. The light liquid separator according to one of the preceding claims, characterized in that the light liquid level is in contact with a float (12) which, when reaching a definite height or angular position, releases an arresting member (14) for the shut-off member (6) through a connection mechanism so that the shut-off member moves from a release position into a blocking position with respect to the inlet (11).

5. The light liquid separator according to claim 4, characterized in that the shut-off member (6) moves by gravity from the release position to the blocking position.

6. The light liquid separator according to one of the preceding claims, characterized in that the blocking member (6) is formed as sphere or as pivotally supported flap.

7. The light liquid separator according to one of the preceding claims, characterized in that the shut-off member (6) in its release position is disposed in an upwardly extending enlargement of the inlet.

8. The light liquid separator according to one of the preceding claims, characterized in that the shut-off member (6) in its blocking position lies on a seat (10) which is formed by the upper edge of an inlet tube which is downwardly bent in a right angle.

9. The light liquid separator according to one of the claims 4 to 8, characterized in that the connection mechanism includes a lever (9) actuated by the float (5) and a rod-like or rope-like transferring member (7) which is disposed with its one end at the end of the lever (9) opposite to the float (12) and with its other end at the arresting member (14).

10. The light liquid separator according to one of the preceding claims, characterized in that the shut-off member (6) is coupled with warning means.

11. The light liquid separator according to one of the preceding claims, characterized in that the shut-off member (6) has a handling mechanism for reconducting the shut-off member (6) to the release position, said handling mechanism extending outwardly from the separator.

12. The light liquid separator according to one of the claims 1 to 5 or 7 to 11, characterized in that the shut-off member is formed as part-sphere (20).

13. The light liquid separator according to claim 12, characterized in that the part-sphere (20) has a curvature pointing towards the flow direction.

14. The light liquid separator according to claim 12 or 13, characterized in that the part-sphere (20) is pivotally supported laterally from the inlet tube (11) and closes in its closed position a downwardly extending inlet tube portion.

## Revendications

1. Séparateur de liquide léger ou volatil avec une entrée (11) pour un mélange de liquide léger ou volatil et de liquide lourd, au moins une chambre de séparation (2), une sortie pour liquide lourd (13) et une évacuation de liquide léger ou volatil (3), où l'entrée (11) pour le mélange de liquide léger ou volatil et de liquide lourd comporte un obturateur (6), caractérisé en ce que l'obturateur (6) bloque automatiquement l'entrée (11) lorsqu'une hauteur déterminée du niveau du liquide léger ou volatil est atteinte.

2. Séparateur de liquide léger ou volatil suivant la revendication 1, caractérisé en ce qu'il présente une fermeture automatique pour la sortie de liquide lourd (13), dont l'actionnement et le blocage de la sortie du liquide lourd (13) provoque une élévation du niveau du liquide léger ou volatil et, de ce fait, un actionnement de l'obturateur (6).

3. Séparateur de liquide léger ou volatil suivant la revendication 1 ou 2, caractérisé en ce qu'il présente un réservoir de liquide léger ou volatil (4) séparé de la chambre de séparation et l'obturateur (6) bloque l'arribée (11) lorsqu'une hauteur déterminée du niveau du liquide léger ou volatil est atteinte dans le réservoir de liquide léger ou volatil.

4. Séparateur de liquide léger ou volatil suivant l'une quelconque des revendications précédentes, caractérisé en ce que le niveau du liquide léger ou volatil est en contact avec un flotteur (12) qui, lors de l'atteinte d'une position angulaire ou d'une hauteur déterminée, libère un organe d'arrêt (14) pour l'obturateur (6) par l'intermédiaire d'un mécanisme de raccordement, en sorte que celui-ci parvienne, par rapport à l'entrée (11), d'une position de libération à une position de blocage ou d'obturation.

5. Séparateur de liquide léger ou volatil suivant la revendication 4, caractérisé en ce que l'obturateur (6) parvient de la position de libération à la position d'obturation ou de blocage sous l'effet de la force de pesanteur.

6. Séparateur de liquide léger ou volatil suivant l'une quelconque des revendications précédentes, caractérisé en ce que l'obturateur (6) est réalisé sous forme de bille ou d'un clapet articulé.

7. Séparateur de liquide léger ou volatil suivant l'une quelconque des revendications précédentes, caractérisé en ce que l'obturateur (6) est agencé dans sa position de libération dans un évasement de l'entrée s'étendant vers le haut.

8. Séparateur de liquide léger ou volatil suivant l'une quelconque des revendications précédentes, caractérisé en ce que l'obturateur (6) repose, dans sa position d'obturation ou de blocage, sur un siège (10) qui est formé par le bord supérieur d'un tube d'entrée courbé à angle droit vers le bas.

9. Séparateur de liquide léger ou volatil suivant l'une quelconque des revendications 4 à 8, caractérisé en ce que le mécanisme de raccordement comprend un levier (9) actionné ou commandé par le flotteur (5) et un organe de transfert (7) en forme de tige ou de câble, qui, par l'une de ses extrémités est raccordé à l'extrémité du levier (9) opposée au flotteur (12) et, par son autre extrémité, à l'organe d'arrêt (14).

10. Séparateur de liquide léger ou volatil suivant l'une quelconque des revendications précédentes, caractérisé en ce que l'obturateur (6) est couplé à une installation d'alerte ou d'avertissement.

11. Séparateur de liquide léger ou volatil suivant l'une quelconque des revendications précédentes, caractérisé en ce que l'obturateur (6) présente un mécanisme de maniement s'étendant à l'extérieur à partir du séparateur et destiné à ramener l'obturateur (6) en sa position de libération.

12. Séparateur de liquide léger ou volatil suivant l'une quelconque des revendications 1 à 5 ou 7 à 11, caractérisé en ce que l'obturateur est réalisé sous forme de bille partielle (20).

13. Séparateur de liquide léger ou volatil suivant la revendication 12, caractérisé en ce que la bille partielle (20) possède une courbure dirigée dans la direction d'écoulement.

14. Séparateur de liquide léger ou volatil suivant la revendication 12 ou 13, cractérisé en ce que la bille partielle (20) est logée de manière pivotante ou articulée latéralement par rapport au tube d'entrée ou d'admission (11) et obture, dans sa position fermée, une section du tube d'arrivée ou d'admission conduisant vers le bas.
